# EUROPÄISCHE PATENTANMELDUNG

(11) **EP 0 768 022 A2**
(43) Veröffentlichungstag der Anmeldung: **16.04.1997**
(21) Anmeldenummer: 96115667.6
(22) Anmeldetag: 30.09.1996
(51) Int. Cl.: A01B 1/02

(54) **Gärtner- und/oder Rodespaten**

(30) Priorität: 30.09.1995 DE 29515600 U
(71) Anmelder: Idealspaten Bredt GmbH & Co. KG, 58313 Herdecke (DE)
(72) Erfinder: Rudolph, H. U., Dipl.-Ing., 58313 Herdecke (DE)
(74) Vertreter: Herrmann-Trentepohl, Werner, Dipl.-Ing.

(57) **Zusammenfassung**

Gärtner- und/oder Rodespaten, dessen Blatt (2) mit seinen Seitenkanten ausgehend von seiner Schulter (3) bis zu einer als Schneide ausgebildeten Querkante (9) konvergierend ausgebildet sind und eine aus dem Rohling des Spatenblattes (2) ausgewalzte Dülle (16) aufweist, welche eine federnde Verbindung des Stieles mit dem Spatenblatt (2) bildet, das einschließlich seiner Dülle (16) ölgehärtet ist, ist erfindungsgemäß vorgesehen, daß mindestens eine der Seitenkanten auf einer Teillänge ihrer Erstreckung bis zur Querkante und ausgehend von der Schneide wellenförmig geprägt und als Schneide (20) einer Axt ausgebildet ist, deren Stiel durch den Spatenstiel und von diesem quer zur federnden Nachgiebigkeit der Dülle (16) und durch das anschließende Spatenblatt (2) verläuft.

## Beschreibung

Die Erfindung betrifft einen Gärtner- und/oder Rodespaten gemäß dem Oberbegriff des Anspruches 1.

Der erfindungsgemäße Spaten unterscheidet sich von anderen Grabewerkzeugen dieser Art durch seinen vergleichsweise langen Stiel, der eine ergonomisch günstige Haltung des Grabenden bei der Arbeit ermöglicht, da sie einerseits einer vorzeitigen Ermüdung vorbeugt und andererseits eine optimale Energieumsetzung bei der Grabearbeit bewirkt. Denn hierbei erfolgt das Einstoßen des Spatenblattes mit Hilfe der Schneide an der Querkante des Spatenblattes, die durch eine senkrecht von oben kommende Stoßbewegung auf den Boden auftrifft und in den Boden eindringt. Andere Grabewerkzeuge haben dagegen kurze Stiele und setzen eine gebeugte Haltung voraus, welche zu schneller Ermüdung führt und außerdem auch wegen ihrer Gewichtsverlagerung nach vorn die Kräfte der Stoßbewegung reduziert.

Der erfindungsgemäße Spaten unterscheidet sich von anderen Spaten auch durch seine besondere Herstellung. Hierbei wird das Spatenblatt aus einem Rohling ausgewalzt und schließlich mit einer Ölhärtung vergütet. Das Auswalzen des Rohlings führt zu einem günstigen Faserverlauf in der ausgewalzten Dülle, in der die Verbindung des Spatenblattes zum Spatenstiel hergestellt wird. Dadurch führt das Einstoßen, Aushebeln und Anheben des abgetrennten Erdreiches in der Regel nicht zu Spannungsspitzen im empfindlichen Übergangsbereich des Spatenblattes und damit auch bei häufiger Benutzung, insbesondere in schwierigem Erdreich und unter erschwerten Bedingungen zur Langlebigkeit des erfindungsgemäßen Spatens, da vorzeitige Brüche und Risse vermieden werden.

Die Grabearbeit, bei der die als Schneide ausgebildete Querkante des Spatenblattes eingesetzt wird, läßt sich weiter durch die ausgewalzte Dülle verbessern, da diese beim Auftreten von Biegemomenten federnd nachgibt. Dadurch ist dafür gesorgt, daß insbesondere beim Aushebeln des abgetrennten Erdreiches eine Dämpfung der Biegebeanspruchungen des Spatenstieles und des Spatenblattes an oder in der Umgebung der Dülle, also dort, wo die höchsten Kraftkonzentrationen auftreten, bewirkt wird, die auch bei den durch den längeren Stiel bedingten starken Biegemomenten den Ermüdungserscheinungen und Stielbrüchen vorbeugt. Wenn der erfindungsgemäße Spaten mit einem Stiel aus einem zähen bis federnden Werkstoff, z.B. mit einem Eschenholzstiel, versehen wird, kann er eine praktisch unbegrenzte Lebensdauer erreichen, sofern übermäßige Gewalt vermieden und ein Minimum an Pflege gewährleistet wird.

Andererseits können derartige Gärtner- und/oder Rodespaten speziellen Anforderungen bislang nicht immer gerecht werden. Bei Tätigkeiten im Garten- und Baumschulenbereich, aber auch bei Rodearbeiten kommt es häufig vor, daß bei der Auflockerung und Beseitigung des einen Wurzelballen umschließenden Erdreiches die Arbeit durch Wurzeln mit unterschiedlichen Querschnitten und Strukturen behindert wird. Solche Wurzeln müssen dann entweder ganz beseitigt oder doch eingekürzt werden. Zwar läßt sich in der Regel ein Teil des störenden Wurzelwerkes mit Hilfe der als Schneide ausgebildeten Querkante des Spatenblattes durch Einstoßen durchtrennen, was allerdings je nach Durchmesser der Wurzeln, ihrer Dicke und Widerstandsfähigkeit, die sie der Schneide entgegensetzen, nur unvollkommen oder gar nicht gelingt. Denn die von oben angesetzte Stoßbewegung des Spatens, welche auf das Wurzelwerk trifft, kann nicht unbegrenzt gesteigert werden. Die aufgewandten Kräfte werden darüber hinaus häufig erheblich reduziert, wenn das Wurzelwerk federt. Gelingt es nicht, das Wurzelwerk auf diese Weise mit dem Spaten zu durchtrennen, muß die Arbeit mit anderen Werkzeugen fortgesetzt werden. Dafür kommen praktisch nur Beile und bei besonders ungünstigen Verhältnissen nur Äxte in Frage, die infolge ihres langen Stieles und der praktisch starren Kraftübertragung vom Stiel auf die Axschneide eine erhebliche Kraftverstärkung im Vergleich mit der Spatenschneide ermöglichen, da die dynamisch aufgebrachten Kräfte erheblich größer sind und praktisch mit keinen oder nur geringen Energieverlusten übertragen werden.

Die Erfindung geht gegenüber den herkömmlichen und eingangs erläuterten Garten- und/oder Rodespaten einen anderen Weg, dessen Grundgedanke im Anspruch 1 wiedergegeben ist. Weitere Merkmale der Erfindung sind Gegenstand der Unteransprüche.

Erfindungsgemäß wird einerseits durch die Veränderung des Spatenblattes, nämlich durch die auf einem Teil der Länge mindestens einer Querkante des Spatenblattes ausgebildete und an der angeschärften Querkante des Spatenblattes ansetzende wellenförmige Schneide und andererseits durch die Nutzung der Dülle, die bei Belastung durch in der Ebene des Spatenblattes wirkende dynamische Kräfte ihre federnden Eigenschaften fast vollständig einbüßt und eine weitgehend starre Kraftübertragung ermöglicht, ohne indessen übermäßig beansprucht zu werden, die Möglichkeit geschaffen, unter den beschriebenen ungünstigen Verhältnissen auf ein Zusatzwerkzeug zu verzichten. Da der Spatenstiel erfindungsgemäß, d.h. wegen seiner Verbindung mit dem Spatenblatt durch die ausgearbeitete Dülle gegen dynamische Beanspruchungen besonders widerstandsfähige ist, zumal wenn er aus zähem Holz handwerklich gefertigt und in der Dülle befestigt ist, wird die Lebensdauer des erfindungsgemäßen Spatens auch bei seiner wiederholten Benutzung als Axt nicht wesentlich herabgesetzt. Anders als beispielsweise Buchenholzstiele, die in angeschweißte Düllen eingesetzt werden, lassen sich die erfindungsgemäßen Spaten auf diese Weise vorteilhaft im gewerblichen und privaten Bereich einsetzen.

Für Rechtshänder eignet sich die Ausführungsform gemäß dem Anspruch 2, da normalerweise der Spaten bei seiner Benutzung als Axt mit der Rückseite des Spatenblattes nach rechts unten geneigt geführt wird, so daß die Richtung der dynamischen Kräfte nach links verläuft. Das ermöglicht den Verzicht auf die Anbringung von wellenförmigen Schneiden an beiden Längskanten des Spatenblattes, sofern der erfindungsgemäße Spaten als Axt nicht sowohl für Links- als auch für Rechtshänder eingerichtet sein soll. Versieht man dagegen nur eine der beiden Längskanten mit einer Schneide in der im Anspruch 2 beschriebenen Anordnung, wird der Aufwand bei seiner Herstellung geringer und die Eignung für die Mehrzahl der Benutzer ergonomisch günstig, die bekanntlich überwiegend Rechtshänder sind.

Die Einzelheiten, weiteren Merkmale und andere Vorteile der Erfindung ergeben sich aus der nachfolgenden Beschreibung einer Ausführungsform anhand der Figuren in der Zeichnung; es zeigen
- Fig. 1: schematisch einen Gärtner- und/oder Rodespaten in einer Draufsicht,
- Fig. 2: in abgebrochener Darstellung den Gegenstand der Fig. 1 in einer Ansicht seiner Rückseite.

Das Spatenblatt 2 des allgemein mit 1 bezeichneten Gärtner- oder Rodespatens weist eine Schulter 3 auf, die üblicherweise mit zwei Querkanten 4, 5 versehen ist, auf die der Benutzer beim Einstoßen des Spatenblattes 2 in das Erdreich auftreten kann. Ausgehend von der Schulter 3 erstrecken sich die Seiten- oder Längskanten 6, 7, die durch das Auswalzen des Spatenblattes zu einem Rohling leicht konvex gekrümmt sind und im übrigen in Richtung auf die freie und als Schneide 8 ausgebildete Querkante 9 konvergieren. Es ergibt sich dadurch eine konische Gestalt des Spatenblattes, die das Eindringen in das Erdreich erleichtert, sobald über den hölzernen und mit einer Krücke 10 versehenen Stiel 11 eine senkrecht von oben kommende Stoßbewegung auf das Spatenblatt 2 ausgeübt wird.

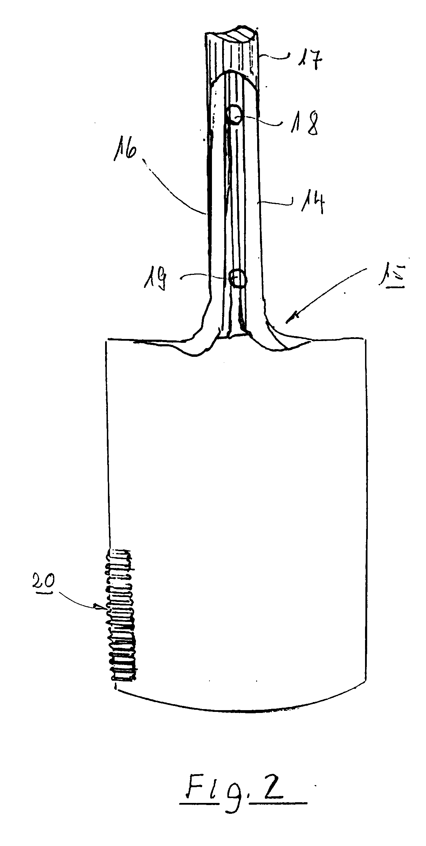

Das Spatenblatt 2 ist einschließlich seiner Dülle aus einem Rohling ausgewalzt. Die Dülle weist zwei Federblätter 12, 14 auf, von denen das Federblatt 12 auf der Vorderseite des Spatenblattes und das Federblatt 14 auf der Rückseite des Spatenblattes ausgebildet ist. Beide Federblätter 12, 14 weisen eine gemeinsame Wurzel 15 auf, mit der die Dülle 16 keilförmig wie bei 17 für die Rückseite und bei 18 für die Vorderseite in das schwach konvex gekrümmte Spatenblatt übergeht. Die beiden Federblätter 12, 14 umschließen das blattseitige Ende 17 des Stieles 11, der mit der Dülle 16 vernietet ist. Dazu dienen zwei mit ihren Köpfen in Fig. 2 angeordnete Niete 18, 19, welche das Stielende 17 und die beiden Federblätter 12 und 14 durchdringen.

Nach dem Auswalzen und Ausarbeiten des Spatenblattes, was im Ergebnis zu einer Baueinheit der Dülle 16 mit dem Spatenblatt 2 führt, erfolgt eine hochwertige Vergütung durch eine Ölhärtung. Diese führt zu einer besonderen Bruchsicherheit des Spatenblattes insbesondere im Bereich der hochbeanspruchten Wurzel 15 der Dülle 16.

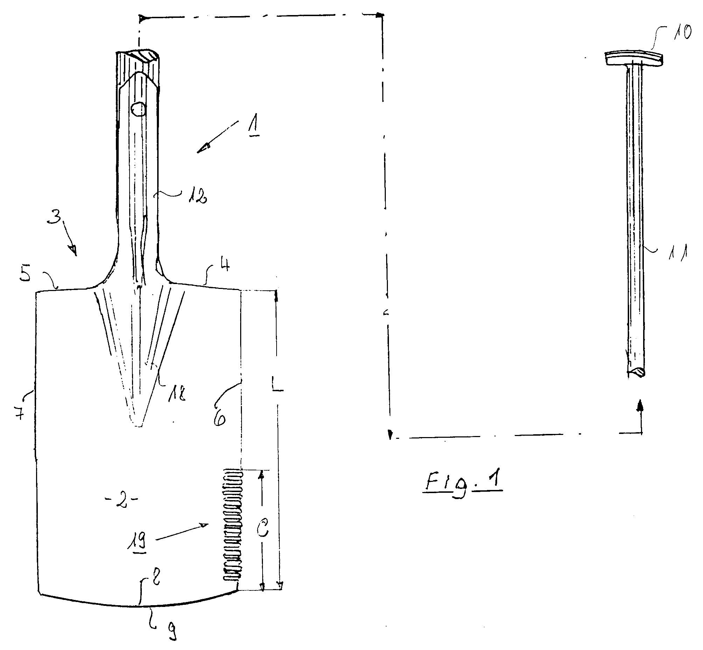

Wie sich aus der Darstellung der Figuren ergibt, ist die Seitenkante 6 auf einer Teillänge l ihrer Erstreckung L bis zur Querkante 9 und ausgehend von der Schneide 8 wellenförmig wie bei 19 beispielsweise in Fig. 1 angedeutet geprägt und mit einer Schneide 20 versehen.

Die Schneide 20 gehört zu einem Werkzeug, das als Axt ausgebildet ist, aber von dem Spaten 1 gebildet wird. Der Axtstiel wird von dem Spatenstiel 11 gebildet, verläuft also durch diesen und ausgehend vom Spatenstiel quer zu der senkrecht zur Zeichenebene federnden Nachgiebigkeit der Dülle 16 und das daran anschließende Spatenblatt bis zur Schneide 20.

Durch die seitliche Anordnung der wellenförmig wie bei 19 dargestellt geprägten Kante, die eine hohe Stabilität garantiert, kann der Spaten mit diesem Bereich als Axt eingesetzt werden. Der lange Hebelarm und die scharf angeschliffene Wellenstruktur 19 ermöglicht eine bedeutend höhere Energieumsetzung beim Bearbeiten des Wurzelwerkes im Vergleich mit der senkrechten Stoßbewegung, die der Schneide 8 der Querkante 9 aufgeprägt wird. Das Eindringen optimiert sich erheblich und entspricht im wesentlichen der Wirkung einer Axt, deren Stiel annähernd die gleiche Länge wie der Spatenstiel 11 aufweist.

Wie sich aus den Darstellungen der Figuren ergibt, ist im Ausführungsbeispiel eine einseitige Anordnung der Axtschneide 20 gewählt, die sich auf der linken Seitenkante 6 des Spatenblattes 2 ergibt, an der auch die wellenförmige Prägung 19 ausgebildet ist.

In der Praxis hat es sich als ausreichend erwiesen, eine etwa 20 mm breite und etwa 110 mm lange Wellenstruktur, die sich über die Länge l erstreckt, vorzusehen. Die Wellenstruktur führt bei scharfem Anschliff der Kante 6 auf der Länge l zur Stabilisierung und verhindert dort vorzeitigen Verschleiß und Gewaltbrüche.

## Patentansprüche

1. Gärtner- und/oder Rodespaten (1), dessen Blatt (2) mit seinen Seitenkanten (6, 7) ausgehend von seiner Schulter (3) bis zu einer als Schneide (8) ausgebildeten Querkante (9) konvergierend ausgebildet sind und eine aus dem Rohling des Spatenblattes (2) ausgewalzte Dülle (16) aufweist, welche eine federnde Verbindung des Stieles (11) mit dem Spatenblatt (2) bildet, das einschließlich seiner Dülle (16) ölgehärtet ist, dadurch gekennzeichnet, daß mindestens eine der Seitenkanten (6) auf einer Teillänge (l) ihrer Erstreckung (L) bis zur Querkante (9) und ausgehend von der Schneide (8) wellenförmig geprägt und als Schneide (20) einer Axt ausgebildet ist, deren Stiel durch den Spatenstiel (11) und von diesem quer zur federnden Nachgiebigkeit der Dülle (16) und durch das anschließende Spatenblatt (2) verläuft.

2. Gärtner- und/oder Rodespaten nach Anspruch 1, dadurch gekennzeichnet, daß bet einseitiger Anordnung der Axtschneide (20) die linke Seitenkante (6) des Spatenblattes (2) wellenförmig geprägt ist.

3. Gärtner- und/oder Rodespaten nach einem der Ansprüche 1 oder 2, dadurch gekennzeichnet, daß die Wellenstruktur (19) ca. 20 mm breit und ca. 110 mm lang ausgebildet ist.

4. Gärtner- und/oder Rodespaten nach einem oder mehreren der vorausgehenden Ansprüche, dadurch gekennzeichnet, daß die Schneide (20) scharf angeschliffen ist.
